Europäisches Patentamt

European Patent Office

Office européen des brevets

(11) Publication number: **0 043 768**
**B1**

# EUROPEAN PATENT SPECIFICATION

(45) Date of publication of patent specification: **03.07.85**

(51) Int. Cl.⁴: **G 01 V 3/26**

(21) Application number: **81401063.3**

(22) Date of filing: **02.07.81**

(54) **System for permeability logging by measuring streaming potential.**

(30) Priority: **07.07.80 US 165997**

(43) Date of publication of application:
**13.01.82 Bulletin 82/02**

(45) Publication of the grant of the patent:
**03.07.85 Bulletin 85/27**

(84) Designated Contracting States:
**DE FR GB IT NL**

(56) References cited:
**US-A-2 433 746**
**US-A-2 475 354**
**US-A-2 814 017**
**US-A-2 974 273**
**US-A-3 599 085**
**US-A-4 043 192**

(73) Proprietor: **Schlumberger Limited**
**277 Park Avenue**
**New York, N.Y. 10172 (US)**
(84) **DE GB NL**

(73) Proprietor: **SOCIETE DE PROSPECTION**
**ELECTRIQUE SCHLUMBERGER**
**42, rue Saint-Dominique**
**F-75340 Paris Cedex 07 (FR)**
(84) **FR IT**

(72) Inventor: **Chandler, Richard N.**
**Beach Hill Road**
**Bridgewater Connecticut, 06752 (US)**

(74) Representative: **Chareyron, Lucien et al**
**Schlumberger Limited Service Brevets c/o Giers**
**12, place des Etats Unis B.P. 121**
**F-92124 Montrouge Cédex (FR)**

The file contains technical information
submitted after the application was filed and
not included in this specification

## Description

### Background of the invention

The present invention relates to method and apparatus for investigating the permeability of earth formations traversed by a borehole, and more particularly to novel and improved method and apparatus for determining the relative or actual permeabilities of the formations by obtaining indications of a characteristic response time of streaming potentials induced by pressure pulses in the formation.

Heretofore, in some prior art practices, information relating to the location and permeability of subsurface earth formations has been obtained by electrical logging methods which are based at least in part on the electrokinetic potential phenomenon that occurs when relative movement is induced between a formation and the fluid contained in the matrices of the formation material. For example, in U.S. Pat. No. 2,814,017, issued Nov. 19, 1957 to Henri-Georges Doll, methods are described for investigating the permeabilities of earth formations or observing the differences in phase between periodic pressure waves passed through the formations and potentials generated by the oscillatory motion of the formation fluid caused by these pressure waves. Conversely, a periodically varying electric current was suggested to be used to generate oscillatory motion of the formation fluid, which in turn generated periodic pressure waves in the formation. Measurements were to be made of the phase displacement between the generating and the generated quantities and a direct indication of the relative permeability of the formation thereby obtained.

In U.S. Patent No. 3,599,085, to A. Semmelink, entitled, "Apparatus for Well Logging by Measuring and Comparing Potentials Caused by Sonic Excitation", the application of low-freqency sonic energy to a formation surface is proposed so as to create large electrokinetic, or streaming, pulses in the immediate area of the sonic generator. In accordance with the disclosure of that patent, the streaming potential pulses generate periodic movements of the formation fluid which produce detectable transient electrokinetic potentials of the same frequency as the applied sonic energy and having magnitudes at any given location directly proportional to the velocity of the fluid motion at that location and inversely proportional to the square of the distance from the locus of the streaming potential pulse. Since the fluid velocity was found to fall off from its initial value with increasing length of travel through the formation at a rate dependent in part open the permeability of the formation rock, it was suggested that the magnitude of the electrokinetic potential at any given distance from the streaming pulse provided an indication of formation permeability.

Other similar techniques are disclosed in U.S. Patents No 2974 273, No 2475 354 and No 2433 746.

Although these above-mentioned methods yield useful data relating to the borehole logging of subsurface formations it is desirable to obtain permeability information through yet other methods which are believed to yield more useful results. More particularly, as provided by the present invention, quasi-static flow is induced in the formation by appropriate pressure pulse excitation and a measurement of the characteristic response time of streaming potentials generated in the formation by such flow is employed to derive more accurate information relating to formation permeability.

### Summary of the invention

It is a general object of the present invention to provide an improved method and apparatus for determining the actual or relative permeability of subsurface earth formations.

The foregoing and other objects are attained, in accordance with on aspect of the invention, by comprising a method for investigating the permeability of earth formations traversed by a borehole according to claim 1.

Another aspect of the invention includes apparatus for investigating the permeability of earth formations traversed by a borehole according to claim 11.

### Brief description of the drawings

In the accompanying drawings:

Fig. 1 is a schematic diagram of suitable apparatus for investigating the permeability of earth formations traversed by a borehole in accordance with the present invention;

Fig. 2 is a schematic diagram of certain details of the pad portion of the apparatus of Fig. 1, showing the relative positions, in accordance with one embodiment of the present invention, of fluid reservoirs and electrodes;

Fig. 3 is a schematic diagram of certain details of the pad portion of the apparatus of Fig. 1, in accordance with another embodiment of the present invention;

Figs. 4(a) through 4(c) respectively are graphs of typical streaming potential pulses detected by the respective embodiments of the apparatus of Figs. 2 and 3; and

Fig. 4(d) is a graph of an idealized fluid pressure pulse generated by the apparatus of Fig. 1.

### Description of a representative embodiment

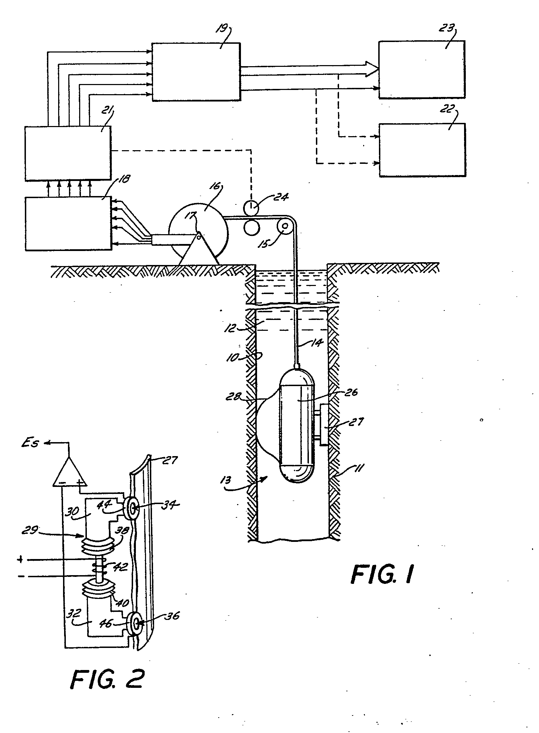

Referring to Fig. 1, a representative apparatus for investigating the permeability of subsurface earth formations in accordance with the present invention is shown disposed in an uncased borehole 10 traversing a subsurface earth formation 11 and containing a borehole fluid 12. Mechanical and electrical control of the downhole tool 13 may be accomplished with a multiconductor cable 14 which passes from the downhole tool 13 through the borehole to a sheave wheel 15 at the surface and then to a suitable drum and winch mechanism 16. Electrical connections between various conductors of the multiconductor cable and various electrical circuits at the surface of the earth are accomplished by means of a suitable multi-element slip-ring and brush contact assembly 17. In this manner, the signals which originate from the downhole investigating tool are supplied to a control panel 18 which in turn supplies signals to a processor 19 and a recorder 21. A suitable signal generator (not shown) supplies current to the downhole tool and to signal processing circuits forming part of processor 19, located at the surface.

Signals obtained from the downhole device may be recorded graphically by a plotter 22 and displayed on a CRT 23. In addition, the signals may be processed to obtain discrete samples which may then be recorded on digital tape. A suitable digital tape recorder is described in U.S. Patent No. 3,648,278 issued to G. K. Miller, et al on March 7, 1972. The signals may be sampled by driving sampling devices, such as those described in the above-mentioned US—A—3648278 Miller, et al patent, by the cable motion as measured at the surface. For example, a cable length measuring wheel 24 may be used in controlling the signal processing, sampling and recording functions as indicated by signal line 25. Therefore, each sample of a measured signal can correspond to one increment in depth and displacements determined between such sample signals would be indicative of depth displacements.

The measured signals or samples thereof may also be transmitted directly to a computer located at the well site. Alternatively, the signals may be transmitted via a transmission system to a computer at a remote location. One transmission system which may be used is described in U.S. Patent 3,599,156 issued to G. K. Miller, et al on August 10, 1971.

The recorded or transmitted signals may be processed as digital measurements by general purpose digital computing apparatus properly programmed in a manner to perform the processes described herein or by special purpose computing apparatus composed of modules arranged to accomplish the described steps to accomplish the same process. The signals may also be processed directly at the well site, using conventional digital computing apparatus forming part of the processor 19 when properly programmed and interfaced to signal conversion means (not shown). One such computing apparatus is the Model PDP-11/45 obtainable from Digital Equipment Corporation. Suppliers of such equipment may also supply signal conditioning circuits and signal conversion means suitable for conditioning and converting analog signals to digital samples for subsequent digital storage and processing. Further, such computing apparatus ordinarily include a memory for storing data and information such as parameters, coefficients and controls used and generated by the processing steps.

The well tool 13 comprises an elongated housing 26 having a pad device 27 for engaging the surface of the formation 11 and means, such as the diametrically disposed, wall-engaging bow spring 28, for resiliently urging the housing 22 and the pad device 27 toward the opposite borehole wall to hold the pad device 27 in firm engagement with the surface of the formation.

The pad device 27 preferably conforms generally to the contour of the borehole wall and is supported on the housing 22 by extensible members so as to be selectably moveable between an outboard, wall-engaging position and an inboard, retracted position. In the illustrative embodiment shown, the logging device is maintained at the inboard position during movement of the tool 13 in the borehole and is caused to be extended from the housing into engagement with a formation to be tested, for example, by activation of a hydraulic system from the ground surface.

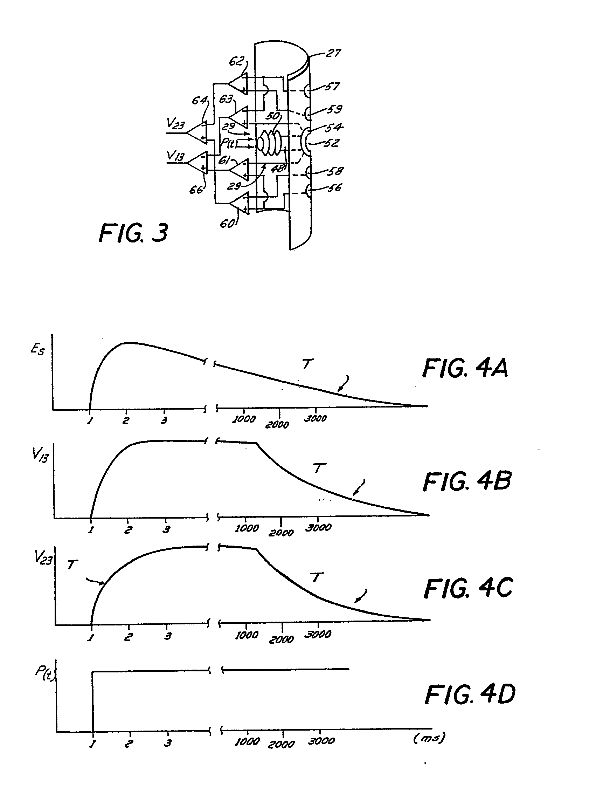

With reference to Figs. 2 and 3, the pad device 27 includes pressure inducing means 29 comprising fluid reservoirs with restricted openings. When the pad device 27, only portions of which are shown for purposes of clarity, is in the wall-engaging position the openings are brought into contact with the adjacent surfaces of the formation. The means 29 may be energized by a suitable source of electrical energy (not shown) which may be controlled from the surface. Electrokinetic potentials resulting from the fluid flow created in the formation by the applied pressure pulses are detected by a system of electrodes mounted on the pad device 27 and connected through appropriate conductors in the cable 14 to the surface apparatus.

In operation, the well tool 13, is positioned opposite a formation to be investigated, the pad device 27 is extended into engagement with the formation surface and the pressure inducing means 29 is activated to excite the formation with pressure pulses the frequency of which is low and typically within a range of up to 1 khz. Thereafter, and while the formation is being excited, the magnitudes of the resultant electrokinetic potentials are detected by the electrodes so that reliable indications of the several potentials are obtained. The measurements may be made continuously over a 4 to 5-cycle period of excitation and then averaged if desired.

With particular reference to Fig. 2, the pressure pulse generating means 29, in accordance with one embodiment of the invention, comprises two fluid reservoirs 30 and 32, having respective spaced apart openings 34, 36 which communicate with the environment outside the pad device 27. The openings are arranged so as to be flush with the borehole wall, i.e., the formation, when the logging device is in the wall-engaging position as discussed above. The reservoirs 30 and 32 respectively comprise bellows arrangements 38 and 40 for effecting the ejection of a fluid, contained in the reservoirs, through the respective openings 34 and 36. In this embodiment the bellows are shown to be driven by a single, common motor 42 which, upon application of suitable driving current to the motor, drives the bellows 38 and 40 in opposition producing a differential pressure of alternating polarity in the adjacent formation. Ring electrodes 44 and 46 are provided around the respective openings 34 and 36. These electrodes are insulated the one from the other and are respectively coupled to an operational amplifier 48 whose output Es is the magnitude of the streaming potential difference between the electrodes.

While water is an excellent example of a fluid which may be employed in the reservoirs other fluids, such as aqueous borehole fluids, are also suitable. The volume of the reservoirs, relative to the amount of fluid necessary to effect production of the pressure pulses, is large enough so that the system may be operated for a considerable amount of time before the fluids are depleted or contaminated to a degree which necessitates replenishing the reservoirs. In any case, if borehole fluid is not suitable, additional supplies of fluid may be stored in the tool to effect automatic resupply of respective reservoirs.

To better understand the operation of the apparatus of Fig. 2, some of the theoretical considerations governing its operations are discussed below.

The electrokinetic variable streaming potential (Es) and differential pressure ($\Delta P$) are simply related by

$$\frac{E_s^{(t)}}{\Delta P(t)} = \frac{\varepsilon \zeta}{4\pi\mu\sigma} \tag{1}$$

provided that: (a) the flow is laminar, (b) all pore (capillary) radii are much smaller than the electro-chemical double layer thickness, and (c) surface conductance does not dominate that of the bulk fluid. Here $\varepsilon$ is the dielectric constant, $\sigma$ is the conductivity, $\mu$ is the viscosity of the fluid, and $\zeta$ is the zeta potential characterizing the solid-liquid surface. Equation (1) has been derived in the literature for porous plugs and has been shown to be a direct consequence of Onsager's principle of irreversable phenomena. Reference may be had to the following for background information: H. R. Kruyt, Colloid Science I, Elsevier Publishing, 1952; P. Sennett, J. P. Olivier, Colloidal Dispensions, Electrokinetic Effects, and the Concept of the Zeta Potential, Chemistry and Physics of Interfaces (D. E. Gushee, Editor), American Chemical Society Publications, 1965; and P. Mazur, J. Th. G. Overbeek, Rec, trav. chim. 70, 1951. Thus it may be established that the temporal behavior of the streaming potential follows that of differential pressure.

Consider a spherical fluid injection source of radius "a" inbedded in an infinite hemogeneous porous media. If fluid is injected into the media from a flexible reservoir of cross-section A, length l and Young's Modulus Y, then the volume flow rate everywhere is:

$$Q = A\Delta l \tag{2}$$

The velocity is:

$$\bar{q}(r,t) = \frac{Q(t)}{4\pi r^2} \hat{r} \tag{3}$$

Darcy's law demands:

$$\bar{q}(r,t) = -\frac{k}{\mu} \text{grad } p(r,t) \tag{4}$$

where k is the permeability of the media; and the boundary condition on pressure p are

$$p(r=\infty,t) = 0 \tag{5}$$

$$p(r=a,t) = P_0(t) = y \frac{\Delta l}{l} \tag{6}$$

when $P_0(t)$ is an applied force on the reservoir. The solution to this set of equations is, at a distance R from the injection port,

$$E_s(R,t) = -\frac{\varepsilon \zeta}{4\pi\mu\sigma} P_0(1-a/R)\exp(-t/T_{bellows}) \tag{7}$$

where the characteristic response time depends simply on flow permeability:

$$T_{bellows} = \frac{Al}{4\pi aY} \frac{\mu}{k} \tag{8}$$

4

Because A, I, a, and y are known constants of the reservoir and the viscosity of water is known, permeability may be directly calculated from $T_{bellows}$ as explained below.

Deviations from spherical geometry affects this result only through a geometric factor. The simple relationship between response time and permeability is unchanged.

Turning again to Fig. 2, regarding measurements at one borehole depth, the output potential Es is the difference in magnitude between the streaming potentials measured at the ring electrode 46 and that of the streaming potentials measured at the ring electrode 44. Es is then determined to obtain indications of the rate of fall-off in fluid pressure in the formation. $T_{bellows}$ can be derived from the slope of the trailing end of this rate by linear regression. Once $T_{bellows}$ is derived equation (8) may then be employed to provide a measurement of formation permeability.

With reference now to Fig. 3, another embodiment for the pad device 27 of the apparatus of the present invention is shown. This embodiment comprises a single fluid reservoir 48 and bellows arrangement for ejecting the fluid that is in the reservoir in a manner effecting the production of quasi-static flow in the formations adjoining the opening 52 when the pad is in a wall engaging position in a borehole as previously described. A ring electrode 54 surrounds the opening 52 and additional, spaced apart electrodes 56, 57, 58 and 59 are provided on the pad device 27. All of the electrodes are electrically insulated the one from the other and may be arranged along the pad device 27 so as to be co-linear. Pairs of electrodes are coupled to respective operational amplifiers to derive differential potential measurements.

In pursuit of that object, electrode 56 is coupled to operational amplifiers 60 and 61 which respectively receive the outputs of electrodes 58 and 54 and electrode 57 is coupled to operational amplifiers 62 and 63 which respectively receive the outputs of electrodes 59 and 54. Another pair of operational amplifiers 64 and 66 respectively receive the outputs of operational amplifiers 60 and 62 and the outputs of operational amplifiers 61 and 63. For purposes of simplification the output of operational amplifier 64 is designated V23 and is illustrated in Fig. 4(c) and that of operational amplifier 66 is designated V13 and is illustrated in Fig. 4(b).

The apparatus of Fig. 3, provides certain advantages over that illustrated in Fig. 2. In addition to the simplified pressure pulse generating arrangement, major advantage is realized when the assumption of the form of the pressure pulse, which is idealized in Fig. 4(d), is replaced by an actual measurement of that waveform obtained by taking differential potential measurements between electrodes 56, 54 and 57 to obtain the measurement V13 illustrated in Fig. 4(b). Differential potential measurements between electrodes 56, 58, 57 and 59, as described above, provide the measurement V23, illustrated in Fig. 4(c), which measurement is representative of the streaming potentials generated in the formations near the location where the pressure pulses are applied both for a short rise time $T_{fluid}$ and the long decay time $T_{bellows}$ as further explained below.

The essential feature of the technique as discussed with reference to the embodiment of Fig. 2, is still valid for the embodiment of Fig. 3, therefore, the conclusion that the flow permeability and characteristic response time of the streaming potentials are simply related still applies. It will be illustrated below that for both the short rise time Tfluid and the long decay time $T_{bellows}$ the following relationship holds:

$$T_{fluid} \propto T_{bellows} \propto 1/k$$

To better understand the operation of the Fig. 3 embodiment, some of the theoretical considerations governing its operations are discussed below where it is illustrated that a permeability measurement can be derived from the characteristic response time of streaming potentials for the short rise time $T_{fluid}$.

The constitutive relations for a water-saturated soil can be derived by generalizing Hooke's Law and including the effect of pore pressure on the principle solid strains only. The following equations were derived for the solid skeleton by M. A. Biot. Reference may be had to an article published in the Journal of Applied Physics, Volume 12, pages 155—164 (1941) and authored by Biot. For incompressible fluid the constitution relations are:

$$2G\varepsilon_{ij} = \sigma_{ij} - \frac{v}{1+v}\sigma_{kk}\delta_{ij} + \frac{2G}{3H}p\delta_{ij} \qquad (10)$$

where
  G=Shear Modulus.
  E=Young's Modulus.
  v=Poisson's Ratio.
  p=Pore Pressure.
  H=Biot's experimental constant measuring aggregate dilation for a change in pore pressure.
  $\sigma_{ij}$=Total Stress Tensor.
  $\varepsilon_{ij}$=Solid Strain Tensor.
and all material parameters represent the aggregate under drained (constant pore pressure) conditions; and
  K=Bulk Modulus of Solid Frame:

$$=\frac{2G(1+v)}{3(1-2v)} \quad (11)$$

where the Einstien convention of repeated indices implying summation has been adopted. Thus $\sigma_{kk}$ is the hyrdostatic stress:

$$(\sigma_{kk}=\sigma_{11}+\sigma_{22}+\sigma_{33}).$$

For the fluid, the constitutive relation is

$$\Delta\phi=\frac{1}{3H}\sigma_{kk}+\frac{P}{R} \quad (12)$$

where R is another experimental constant and $\phi$ is the porosity Geertsma and Smit, Geophysics, Vol. XXVI, No. Z AP12, 1961, make the identification:

$$\frac{1}{H}=\frac{1}{K}[1-K/K_s]$$

$$\frac{1}{R}=\frac{1}{K}[1-\frac{K}{K_s}(1+\phi)]$$

where Ks is the bulk modulus of the solid grains. The constitutive relations then become:

$$2G\varepsilon_{ij}=\sigma_{ij}-\frac{v}{1+v}\sigma_{kk}+\frac{(1-2v)}{1+v}(1-K/K_s)p\delta_{ij}$$

$$\Delta\phi=\frac{1}{3K}(1-K/K_s)\sigma_{kk}+\frac{P}{K}(1-\frac{K(1+\phi)}{K_s}) \quad (13)$$

The linearized change in fluid mass within a volume element of aggregate is:

$$\Delta m_f=\phi_0\Delta\rho+\rho_0\Delta\phi \quad (14)$$

where $\phi_0$, $\rho_0$ are the unstressed reference values of the porosity and fluid density, respectively. The equation of state for the fluid is:

$$C_P{}^2=\frac{K_f}{\rho_0}=\frac{P}{\rho-\rho_0} \quad (15)$$

where Kf=Bulk Modulus of the fluid.

Mass conservation within a unit volume element requires:

$$q_{i,i}+m_{,t}=0 \quad (16)$$

Pore fluid diffusion in a homogeneous media is governed by the Darcy equation:

$$q_i=-\frac{\rho_0 k}{\mu}p_{,i} \quad (17)$$

Finally, the equation of momentum conservation is, for no body forces

$$\sigma_{ij,j}=0 \quad (18)$$

Combining these equations, one obtains, for the cases of time-independant boundary conditions (including Heaviside functions) or infinite spatial extent (i.e., single dimensional flow), a homogeneous diffusion equation in pore pressure alone:

$$C_D P_{,zz} - P_{,t} = 0$$

where $C_D$=fluid diffusivity= $\dfrac{kK_{eff}}{\mu\phi}$ (19)

and

$$K_{eff}=\text{Effective Modulus}=K_f\left[1+\frac{K_f}{\phi(K+\frac{4}{3}G)}\left\{1+\frac{1}{K_s}\frac{4}{3}[-\frac{4}{3}G(1-K/K_s)-K-\phi(K+\frac{4}{3}G)]\right\}\right]^{-1}$$

the solutions of which are well covered in the literature. Reference may be had to a 1959 Clarendon Press publication by H. S. Carslaw and J. C Jaegar entitled "Conduction of Heat in Solids" for such solutions. The fluid modulus Kf and viscosity are known constants, as is the modulus of the rock grains Ks. Porosity and the moduli Kf and G are obtainable from acoustic logs and to a very good approximation, may be obtained from the acoustic compressional velocity alone.

One may then wish to consider relevant cases where heaviside pressure source at z=0, zero pressure at z=l, and zero initial pressure everywhere.

The partial differential equation (19) is reduced to an ordinary differential equation via Laplace transformation:

$$P_{,zz}-a^2P=0 \qquad (20)$$

$$a^2=s/C_D$$

The general solution is:

$$P=Ae^{-az}+Be^{+az} \qquad (21)$$

Applying boundary conditions:

$$P(z=0)=P_o/s=A+B$$

$$P(z=l)=0=Ae^{-al}+Be^{+al}$$

yields

$$P(z,s)=\frac{P_o}{s}\frac{1}{1-e^{-2al}}(e^{-az}-e^{+a(z-2l)}) \qquad (22)$$

The transform is:

$$p(z,t)=P_o\left[1-\frac{z}{l}-\frac{2}{\pi}\sum_{n=1}^{\infty}\frac{1}{n}\exp\left(\frac{-n^2\pi^2C_Dt}{l^2}\right)\sin\left(\frac{n\pi z}{l}\right)\right] \qquad (23)$$

Pore pressure quickly reduces to dominant exponential behavior with a characteristic time of:

$$T_{fluid}\simeq\frac{l^2}{C_D\pi^2} \qquad (24)$$

where, from prior discussion CD∝k. From the above outlined analysis it was found that for the case of no body forces, time independent bounary conditions, and uncoupled flow and deformation, quasi-static flow is governed by a homogeneous diffusion equation in pore pressure alone. Solving for a case involving sudden application of pore pressure, it was discovered that a characteristic time for pressure diffusion and streaming potential depends on flow permeability.

It has been discovered that by using:

$$C_D\simeq\frac{kK_f}{\mu\phi}\left(1+\frac{1}{5\phi}\right)^{-1}, \text{ e.g., } K/K_f=5, K_s=\infty$$

for a variety of natural rocks good agreement is obtained between measured permeability obtained by using the techniques of the present invention and the known permeabilities of the samples.

On a time scale long compared to Tfluid the streaming potential exhibits a simple exponential decay characterized by the decay time Tbellows, equation (8), resulting from the competition between bellows compression and the drag forces of Darcy flow.

In one technique for performing the measurement, the two streaming potentials V13 and V23 are digitized and stored. $T_{fluid}$ can be derived by using V13 as the input waveform. V23 as the output, and parametrically fitting an impulse response of the form:

$$h(t) = \exp(-t/T_{fluid}) \qquad (25)$$

subject to a minimum least-square error criterion. $T_{bellows}$ may be found by linear regression. It has been observed that the estimate of permeability obtained by each of these measurements agrees to within 10% of the value obtained by a static flow measurement.

In the absence of information regarding matrix compressional properties it may satisfactory, by an analysis of the characteristic response time of the early portions $T_{fluid}$ of the respectively induced transient streaming potentials to derive a lower bound value for the formation permeability. An upper bound value may then be derived from an analysis of later portions $T_{bellows}$ of the characteristic response time of the induced transient streaming potentials.

It will be understood, of course, that any desired number of outer electrodes can be provided at spaced intervals along the surface of the logging device 27 and the data thereby provided conveniently employed to derive more accurate information of the electrokinetic potentials at different, closer intervals of the formations.

The presence of mud cake on the borehole walls, as is typical of rotary drilled wells, does not have a material effect on the results obtained by the methods of the present invention since the pressure pulses are still effective to compress the formation surface and thereby cause the periodic electrokinetic potentials to be created in the formation. Furthermore, the mud cake may be penetrated for the purpose of direct fluid injection into the formation. Moreover, the mud cakes are typically very much less permeable than earth formation of commercial interest and, therefore, the transient response associated with the movement of the mud filtrate through the cake are very small in comparison to the transient response associated with the formation being investigated. In consequence, the major components of the streaming potential pulses measured are attributable to the movement of the formation fluid through the formation material.

It will be understood by those skilled in the art that the above-described embodiment of the invention is intended to be merely exemplary, and that it is susceptible of modification and variation without departing from the spirit and scope of the invention. For example, other means may be employed for applying sonic energy to a formation surface, such as, for example, an electroacoustical transducer apparatus of the type disclosed in the prior art U.S. Pat. No. 3,138,219.

**Claims**

1. A method of investigating the permeability of earth formations traversed by a borehole comprising the steps of:

a) positioning at a depth and in proximity to a borehole wall in a formation a tool comprising a source of repetitive mechanical excitation capable of causing electrokinetic potential transients to be formed in said formation;

b) actuating the tool so as to repetitively excite the formation and to correspondingly produce electrokinetic potential transients in said formation around said depth at least one determined location; characterized by

c) measuring said electrokinetic potential transients;

d) determining a characteristic response time from said electrokinetic potential transients;

e) producing as a function of said determined characteristic response time an indication of the formation permeability.

2. The method of claim 1 characterized by recording said indication of the formation permeability as a function of said depth.

3. The method of claim 1 or 2 characterized by positioning said source in contact with the surface of the borehole within the formation.

4. The method according to claim 1, 2 or 3 characterized in that the formation is sequentially excited at two separate locations; in that, between the measuring step c) and the determining step d), differential measurements of the electrokinetic potential transients at each of said locations are effected and in that the determining step d) is consequently modified by determining said characteristic response time from said differential measurements.

5. The method according to claim 3 or 4 characterized in that the electrokinetic potential transients are averaged obtaining an average electrokinetic potential transient and in that the determination of the characteristic response time in the determining step d) is based on said average electrokinetic potential transient.

6. The method according to any one of claims 1 to 5 characterized in that the frequencies of repetition of actuating the source are within the range of up to 1,000 c.p.s..

7. The method according to any one of claims 1 to 6 characterized in that said source is a mechanical transducer which effects the injection of a fluid into the formation; and said actuating step b) comprises actuating the transducer to inject fluid under pressure into the formation.

8. The method according to any one of claims 1 to 7 characterized in that: said determined characteristic response time is related to the rise time ($T_{fluid}$) of said measured electrokinetic potential transients.

9. The method according to any one of claims 1 to 7 characterized in that: said determined characteristic response time is related to both the rise time ($T_{fluid}$) and decay time ($T_{bellows}$) of said electrokinetic potential transients.

10. The method according to claim 7 characterized in that: said source produces said electrokinetic potential transients by applying fast rising fluid pressure pulses into said formation.

11. Apparatus for investigating the permeability of earth formations traversed by a borehle (10) comprising:
a tool (13) comprising a source (29) of repetitive mechanical excitation capable of causing electrokinetic potential transients to be formed in a formation;
positioning means (28) for positioning said source (29) in proximity to the borehole wall;
actuating means (18) for actuating the tool so that when the source is in proximity to the borehole wall, it is effective in producing electrokinetic potential transients in said formation, characterized by:
at least one measuring means for measuring the electrokinetic potential transients;
means for determining a characteristic response time ($T_{fluid}$, $T_{bellows}$) of said formation from the output of said at least one measuring means; and
means (19) for producing as a function of said determined characteristic response time an indication of the formation permeability.

12. The apparatus of claim 11 characterized by recording means (22) for recording said indication of said formation permeability as a function of formation depth.

13. Apparatus according to claim 11 or 12 characterized in that:
said at least one measuring means comprises a plurality of electrodes (44, 46, 56, 57, 58, 59) arranged in spaced relationship about said source.

14. Apparatus according to any one of claims 11 to 13 characterized in that:
said source includes a fluid injector (48).

15. Apparatus according to any one of claims 11 to 14 characterized in that the actuating means (18) is adapted to effect frequencies of repetitive actuation of the source within a range of up to 1,000 c.p.s.

16. Apparatus according to any one of claims 11 to 15 characterized in that said tool comprises:
a body member (26) sized for a passage through the borehole and
a pad device (27) carried on said body member; wherein
said positioning means includes means (28) carried on said body member for selectively bringing said pad device into engagement with the surrounding borehole surface when said body member is in a borehole;
in that said source (29) is carried on said pad device (27) and in that
said means for measuring the electrokinetic potential transients is carried on said pad device.

**Revendications**

1. Procédé pour l'étude de la perméabilité des formations terrestres traversées par un sondage comprenant les étapes suivantes:
a) placer à une profondeur et à proximité de la paroi d'un sondage dans une formation un appareil comprenant une source d'excitation mécanique répétitive capable de produire des signaux transitoires de potentiel électrocinétique dans ladite formation;
b) faire fonctionner l'appareil de façon à exciter répétitivement la formation et à produire des signaux transitoires correspondants de potentiel électrocinétique dans ladite formation autour de cette profondeur à au moins un emplacement déterminé, caractérisé par les étapes suivantes:
c) mesurer lesdits signaux transitoires de potentiel électrocinétique;
d) déterminer un temps de réponse caractéristique à partir desdits signaux transitoires de potentiel électrocinétique;
e) fournir, en fonction dudit temps de réponse caractéristique détermine, une indication de la perméabilité de la formation.

2. Procédé selon la revendication 1, caractérisé en ce qu'on enregistre ladite indication de la perméabilité de la formation en fonction de ladite profondeur.

3. Procédé selon la revendication 1 ou 2, caractérisé en ce qu'on place ladite source en contact avec la surface du sondage dans la formation.

4. Procédé selon la revendication 1, 2 ou 3, caractérisé en ce que la formation est excitée

9

séquentiellement à deux emplacements séparés; en ce que, entre l'étape de mesure c) et l'étape de détermination d), on effectue des mesures différentielles des signaux transitoires de potentiel électrocinétique à chacun desdits emplacements et en ce que l'étape de détermination d) est modifiée en conséquence en déterminant ledit temps de réponse caractéristique à partir desdites mesures différentielles.

5. Procédé selon la revendication 3 ou 4, caractérisé en ce que l'on calcule une moyenne des signaux transitoires de potentiel électrocinétique et en ce que la détermination du temps de réponse caractéristique de l'étape de détermination d) est basée sur ladite moyenne des signaux transitoires de potentiel électrocinétique.

6. Procédé selon l'une quelconque des revendications 1 à 5, caractérisé en ce que les fréquences de répétition pour faire fonctionner la source sont situées dans une plage allant jusqu'à 1.000 coups par seconde.

7. Procédé selon l'une quelconque des revendications 1 à 6, caractérisé en ce que ladite source est un transducteur mécanique qui effectue l'injection d'un fluide dans la formation; et

ladite étape de fonctionnement b) comprend l'opération consistant à faire fonctionner le transducteur pour injecter du fluide sous pression dans la formation.

8. Procédé selon l'une quelconque des revendications 1 à 7, caractérisé en ce que:

ledit temps de réponse caractéristique déterminé est fonction du temps de montée ($T_{fluide}$) desdits signaux transitoires mesurés de potentiel électrocinétique.

9. Procédé selon l'une quelconque des revendications 1 à 7, caractérisé en ce que:

ledit temps de réponse caractéristique déterminé est fonction à la fois du temps de montée ($T_{fluide}$) et du temps de décroissance ($T_{soufflets}$) desdits signaux transitoires de potentiel électrocinétique.

10. Procédé selon la revendication 7, caractérisé en ce que:

ladite source produit lesdits signaux transitoires de potentiel électrocinétique en appliquant des impulsions de pression de fluide à montée rapide dans la formation.

11. Dispositif pour l'étude de la perméabilité des formations terrestres traversées par un sondage (10) comprenant:

un appareil (13) comprenant une source (29) d'excitation mécanique répétitive capable de produire des signaux transitoires de potentiel électrocinétique dans une formation;

des moyens de positionnement (28) pour positionner ladite source (29) à proximité de la paroi du sondage;

des moyens de commande (18) pour faire fonctionner l'appareil de façon que, lorsque la source est à proximité de la paroi du sondage, elle produise effectivement des signaux transitoires de potentiel électrocinétique dans la formation, caractérisé par:

au moins un ensemble de mesure pour mesurer les signaux transitoires de potentiel électrocinétique;

des moyens pour déterminer un temps de réponse caractéristique ($T_{fluide}$, $T_{soufflets}$) de ladite formation à partir du signal de sortie dudit ensemble de mesure; et

des moyens (19) pour produire, en fonction dudit temps de réponse caractéristique déterminé une indication de la perméabilité de la formation.

12. Dispositif selon la revendication 11, caractérisé par des moyens d'enregistrement (22) pour enregistrer ladite indication de ladite perméabilité de la formation en fonction de la profondeur de la formation.

13. Dispositif selon la revendication 11 ou 12, caractérisé en ce que:

ledit ensemble de mesure comprend une pluralité d'électrodes (44, 46, 56, 57, 58, 59) espacées de ladite source.

14. Dispositif selon l'une quelconque des revendications 11 à 13, caractérisé en ce que:

ladite source comprend un injecteur de fluide (48).

15. Dispositif selon l'une quelconque des revendications 11 à 14, caractérisé en ce que les moyens de commande (18) sont adaptés à fournir des fréquences de fonctionnement répétitif de la source dans une plage allant jusqu'à 1.000 coups par seconde.

16. Dispositif selon l'une quelconque des revendications 11 à 15, caractérisé en ce que l'appareil comprend:

un corps (26) ayant des dimensions lui permettant de passer au travers du sondage; et

un patin (27) porté par ledit corps, dans lequel lesdits moyens de positionnement comprennent des moyens (28) portés par ledit corps pour amener sélectivement ledit patin en contact avec la surface environnante du sondage lorsque ledit corps est dans le sondage;

en ce que ladite source (29) est portée par ledit patin 27;

et en ce que ledit ensemble pour mesurer les signaux transitoires de potentiel électrocinétique est porté par ledit patin.

**Patentansprüche**

1. Ein Verfahren der Permeabilitätsuntersuchung von Erdformationen, durchteuft von einem Bohrloch, umfassend die Schritte:

a) Positionieren eines Bohrlochgeräts in einer Tiefe und in der Nähe einer Bohrlochwandung in einer

**0 043 768**

Formation, welches Bohrlochgerät eine Quelle wiederholter mechanischer Erregung umfaßt, ausgebildet zum Bewirken der Ausbildung elektrokinetischer Potentialtransienten in der genannten Formation,

b) Betätigen des Bohrlochgeräts derart, daß die Formation wiederholt erregt wird und entsprechend elektrokinetische Potentialtransienten in der genannten Formation rings um die genannte Tiefe an zumindest einer vorgegebenen Stelle erzeugt werden, gekennzeichnet durch

c) Messen der genannten elektrokinetischen Potentialtransienten,

d) Bestimmung einer charakteristischen Ansprechzeit von den genannten elektrokinetischen Potentialtransienten,

e) Erzeugen in Funktion der genannten bestimmten charakteristischen Ansprechzeit einer Angabe der Formationspermeabilität.

2. Das Verfahren nach Anspruch 1, gekennzeichnet durch Aufzeichnen der genannten Angabe der Formationspermeabilität als eine Funktion der genannten Tiefe.

3. Das Verfahren nach Anspruch 1 oder 2, gekennzeichnet durch Positionieren der genannten Quelle in Kontakt mit der Oberfläche des Bohrlochs innerhalb der Formation.

4. Das Verfahren entsprechend Anspruch 1, 2 oder 3, dadurch gekennzeichnet, daß die Formation sequentiell an zwei separaten Stellen erregt wird, daß zwischen dem Meßschritt c) und dem Bestimmungsschritt d) Differentialmessungen der elektrokinetischen Potentialtransienten an jeder der genannten Stellen erfolgen und daß der Bestimmungsschritt d) dementsprechend modifiziert wird durch Bestimmen charakteristischer Ansprechzeit von den genannten Differentialmessungen.

5. Das Verfahren entsprechend Anspruch 3 oder 4, dadurch gekennzeichnet, daß die elektrokinetischen Potentialtransienten gemittelt werden unter Erhalt eines mittleren elektrokinetischen Potentialtransienten und daß die Bestimmung der charakteristischen Ansprechzeit in dem Bestimmungsschritt d) auf dem genannten mittleren elektrokinetischen Potentialtransienten basiert wird.

6. Das Verfahren entsprechend einem der Ansprüche 1 bis 5, dadurch gekennzeichnet, daß die Wiederholungsfrequenzen der Quellenbetätigung innerhalb des Bereichs von bis zu 1000 Hz sind.

7. Das Verfahren entsprechend einem der Ansrpüche 1 bis 6, dadurch gekennzeichnet, daß die Quelle ein mechanischer Umsetzer ist, welcher die Injektion eines Fluids in die Formation ausführt und daß der Betätigungsschritt b) die Betätigung des Umsetzers umfaßt zum Injizieren von Fluid unter Druck in die Formation.

8. Das Verfahren entsprechend einem der Ansprüche 1 bis 7, dadurch gekennzeichnet, daß die genannte bestimmte charakteristische Ansrpechzeit in Beziehung gesetzt wird zu der Anstiegszeit ($T_{fluid}$) der genannten gemessenen elektrokinetischen Potentialtransienten.

9. Das Verfahren entsprechend einem der Ansprüche 1 bis 7, dadurch gekennzeichnet, daß die genannte bestimmte charakteristische Ansprechzeit in Beziehung gesetzt wird zu sowohl der Anstiegszeit ($T_{fluid}$) als auch der Abklingzeit ($T_{bellows}$) der genannten elektrokinetischen Potentialtransienten.

10. Das Verfahren entsprechend Anspruch 7, dadurch gekennzeichnet, daß die genannte Quelle die genannten elektrokinetischen Potentialtransienten erzeugt durch Einwirkenlassen schnellansteigender Fluiddruckimpulse in die Formation.

11. Vorrichtung für die Permeabilitätsuntersuchung von Erdformationen, durchteuft von einem Bohrloch (10), umfassend:

ein Bohrlochgerät (13) mit einer Quelle (29) wiederholter mechanischer Erregung, ausgebildet zum Bewirken der Bildung elektrokinetischer Potentialtransienten in einer Formation,

Positioniermittel (28) zum Positionieren der genannten Quelle (29) nahe der Bohrlochwandung,

Betätigungsmittel (18) für die Betätigung des Bohrlochgeräts derart, daß, wenn die Quelle sich nahe der Bohrlochwandung befindet, sie wirksam wird für die Erzeugung elektrokinetischer Potentialtransienten der genannten Formation, gekennzeichnet durch:

mindestens ein Meßmittel für die Messung der elektrokinetischen Potentialtransienten,

Mittel für die Bestimmung einer charakteristischen Ansprechzeit ($T_{fluid}$, $T_{bellows}$) der genannten Formation aus dem Ausgang des genannten mindestens einen Meßmittels und

Mittel (19) zum Erzeugen, als eine Funktion der genannten charakteristischen Ansprechzeit, einer Angabe der Formationspermeabilität.

12. Die Vorrichtung nach Anspruch 11, gekennzeichnet durch Aufzeichnungsmittel (22) für das Aufzeichnen der genannten Angabe der genannten Formationspermeabilität als eine Funktion der Formationstiefe.

13. Vorrichtung entsprechend Anspruch 11 oder 12, dadurch gekennzeichnet, daß das genannte mindestens eine Meßmittel eine Mehrzahl von Elektroden (44, 46, 56, 57, 58, 59) umfaßt, die in beabstandeter Beziehung um die genannte Quelle angeordnet sind.

14. Vorrichtung nach einem der Ansrüche 11 bis 13, dadurch gekennzeichnet, daß die genannte Quelle einen Fluidinjektor (48) einschließt.

15. Vorrichtung nach einem der Ansprüche 11 bis 14, dadurch gekennzeichnet, daß die Betätigungsmittel (18) ausgebildet sind zum Erzeugen von Frequenzen der wiederholten Betätigung der Quelle innerhalb eines Bereiches von bis zu 1000 Hz.

16. Vorrichtung nach einem der Ansprüche 11 bis 15, dadurch gekennzeichnet, daß das genannte Bohrlochwerkzeug umfaßt:

einen Trägerkörper (26), bemessen für den Druchlauf durch das Bohrloch und

11

**0 043 768**

eine Kisseneinrichtung (27), die von dem Trägerkörper getragen wird, worin

die genannten Positioniermittel Mittel (28) einschließen, getragen von dem genannten Trägerkörper für das selektive Inkontaktbringen der genannten Kisseneinrichtung mit der umgebenden Bohrlochoberfläche, wenn sich der genannte Trägerkörper in einem Bohrloch befindet,

daß die genannte Quelle (29) von der genannten Kisseneinrichtung (27) getragen wird, und

daß die genannten Mittel für die Messung der elektrokinetischen Potentialtransienten von der genannten Kisseneinrichtung getragen werden.

12

# 0 043 768

FIG. I

FIG. 2

0 043 768

FIG. 3

FIG. 4A

FIG. 4B

FIG. 4C

FIG. 4D

2